# EUROPEAN PATENT APPLICATION

(11) **EP 4 254 332 A1**
(43) Date of publication of application: **04.10.2023**
(21) Application number: 22192805.4
(22) Date of filing: 30.08.2022
(51) Int. Cl.: G06T 7/12, G01C 21/00, G01C 21/32, G06N 3/08

(54) **METHOD AND APPARATUS FOR OPTIMIZING MAP DATA, AND STORAGE MEDIUM**

(30) Priority: 30.03.2022 CN 202210331902
(71) Applicant: Apollo Intelligent Connectivity (Beijing) Technology Co., Ltd., Beijing 100176 (CN)
(72) Inventor: CAI, Yuzhan, Beijing, 100176 (CN); YAN, Qingyue, Beijing, 100176 (CN); YAN, Chao, Beijing, 100176 (CN)
(74) Representative: Nederlandsch Octrooibureau

(57) **Abstract**

The present disclosure provides a method and apparatus for optimizing map data, a device and a storage medium, relates to the technical field of image processing, and in particular relates to artificial intelligence, intelligent transportation, smart cities and smart cockpits. A specific implementation is: performing a completeness detection of a lane line on received local map data comprising road condition information to obtain a detection result, the detection result comprising the lane line being complete or is the lane line having a missing area; in a case where the detection result is the lane line having the missing area, performing completion processing on the lane line having the missing area to obtain completed local map data; and performing a rationality detection on the completed local map data, and in a case of passing the detection, synthesizing the completed local map data with global map data to obtain an optimization result of map data. The method of the present disclosure may be applicable to map data optimization in different scenarios, thereby improving generalization.

## Description

### TECHNICAL FIELD

The present disclosure relates to the technical field of image processing, in particular to artificial intelligence, intelligent transportation, smart cities, etc., and more particularly, to a method and apparatus for optimizing map data, and a storage medium.

### BACKGROUND

With the improvement of traffic intelligence, each traffic participant may act as a data provider. For example, traffic participants may record current traffic situations, and map servers may generate and release smart map data based on data uploaded by the traffic participants. In the related art, the data uploaded by the traffic participants cannot be processed to satisfy the compatibility and accuracy, resulting in poor release effects of the smart map data.

### SUMMARY

The present disclosure provides a method and apparatus for optimizing map data, and a storage medium.

According to an aspect of the present disclosure, a method for optimizing map data is provided, and the method includes the following steps:
performing a completeness detection of a lane line on received local map data including road condition information to obtain a detection result, the detection result including the lane line being complete or the lane line having a missing area;
in a case where the detection result is the lane line having the missing area, performing completion processing on the lane line having the missing area to obtain completed local map data; and
performing a rationality detection on the completed local map data, and in a case of passing the detection, synthesizing the completed local map data with global map data to obtain an optimization result of map data.

According to another aspect of the present disclosure, an apparatus for optimizing map data is provided, and the apparatus may include:
a completeness detection module, configured to perform a completeness detection of a lane line on received local map data including road condition information to obtain a detection result, the detection result including the lane line being complete or the lane line having a missing area;
a lane line completion processing module, configured to, in a case where the detection result is the lane line having the missing area, perform completion processing on the lane line having the missing area to obtain completed local map data; and
a rationality detection module, configured to perform a rationality detection on the completed local map data, and in a case of passing the detection, synthesize the completed local map data with global map data to obtain an optimization result of map data.

According to another aspect of the present disclosure, a non-transitory computer readable storage medium storing computer instruction is provided, where the computer instructions are used to cause the computer to perform the method in any embodiment of the present disclosure.

According to another aspect of the present disclosure, a computer program product including a computer program/instruction is provided, where the computer program/instruction, when executed by a processor, implements the method in any embodiment of the present disclosure.

The technology according to the present disclosure overcomes the defect that lane lines cannot be fully covered in the received local map data, and when it is detected that there is a missing area in the lane lines, lane line completion processing may be performed on the local map data. The technology is applicable to different scenarios, thereby improving generalization. In addition, since the rationality detection is set, an accuracy of the completed lane line may be guaranteed.

It should be understood that contents described in this section are neither intended to identify key or important features of embodiments of the present disclosure, nor intended to limit the scope of the present disclosure. Other features of the present disclosure will become readily understood in conjunction with the following description.

### BRIEF DESCRIPTION OF THE DRAWINGS

The accompanying drawings are used for better understanding of the present solution, and do not constitute a limitation to the present disclosure. In which:
Fig. 1 is a flowchart of a method for optimizing map data according to the present disclosure;
Fig. 2 is a flowchart of performing completion processing on a lane line having a missing area according to the present disclosure;
Fig. 3 is a flowchart of a training process of a lane line completion model according to the present disclosure;
Fig. 4 is a flowchart of a method for determining a preliminary trained lane line completion model according to the present disclosure;
Fig. 5 is a first flowchart of evaluating a completion prediction result of a missing area of a lane line according to the present disclosure;
Fig. 6 is a second flowchart of evaluating a completion prediction result of the missing area of the lane line according to the present disclosure;
Fig. 7 is a third flowchart of evaluating a completion prediction result of the missing area of the lane line according to the present disclosure;
Fig. 8 is a topology diagram of the method for optimizing map data according to the present disclosure;
Fig. 9 is a schematic diagram of an apparatus for optimizing map data according to the present disclosure; and
Fig. 10 is a block diagram of an electronic device used to implement the method for optimizing map data according to embodiments of the present disclosure.

### DETAILED DESCRIPTION OF EMBODIMENTS

Example embodiments of the present disclosure are described below with reference to the accompanying drawings, where various details of the embodiments of the present disclosure are included to facilitate understanding, and should be considered merely as examples. Therefore, those of ordinary skills in the art should realize that various changes and modifications can be made to the embodiments described here without departing from the scope and spirit of the present disclosure. Similarly, for clearness and conciseness, descriptions of well-known functions and structures are omitted in the following description.

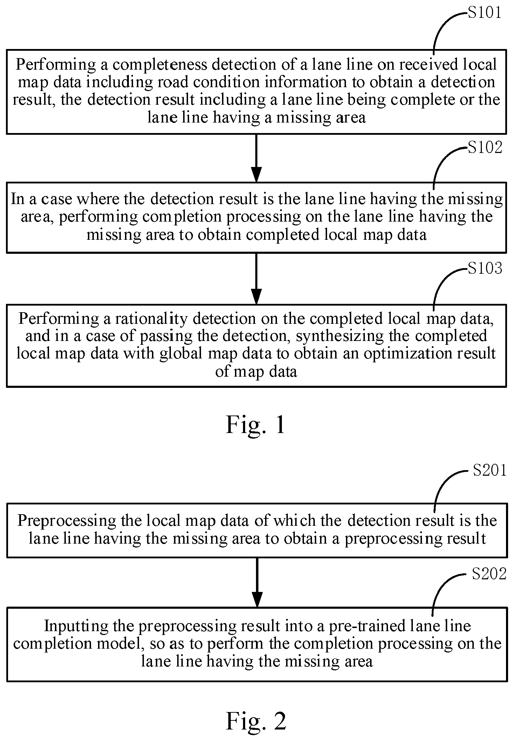

As shown in Fig. 1, the present disclosure relates to a method for optimizing map data, and the method may include the following steps:
S101: performing a completeness detection of a lane line on received local map data including road condition information to obtain a detection result, the detection result including the lane line being complete or is the lane line having a missing area;
S102: in a case where the detection result is the lane line having the missing area, performing completion processing on the lane line having the missing area to obtain completed local map data; and
S103: performing a rationality detection on the completed local map data, and in a case of passing the detection, synthesizing the completed local map data with global map data to obtain an optimization result of map data.

An executing body of the present disclosure may be a server or a cloud for performing map generation or map releasing. For example, maps mentioned in the present disclosure may be crowdsourced maps. The crowdsourced maps refer to real-time updating of road static environment and dynamic information by means of crowdsourcing. Through the updating and releasing of the crowdsourced maps, the use of (high-accuracy) maps having timeliness requirements (such as autonomous driving scenarios, or semi-autonomous driving scenarios) may be supported.

The received local map data including the road condition information may be map data uploaded by traffic participants, such as real-time map data of a south-to-north travelling section of XX Road, Haidian District, Beijing. Since the map data can only reflect conditions of some road sections, it may be called local map data compared to a global map. The road condition information may include dynamic information such as traffic jams, or temporary traffic control.

Since collection of the crowdsourced maps is uncontrolled, the received local map data may be diverse and complex, and it is easy to occur that there is no data in a few road sections. Based on this, it is necessary to complete the data for the above situation.

In this regard, the related art has defects of poor generalization capabilities, high losses of calculation processes, and high costs of map update. For example, the related art has a poor generalization capability for complex scenarios. For each new scenario, customized development is required. As another example, in the calculation process, collection needs to be performed multiple times to traverse lane lines in different areas of a whole map, so as to perform processes such as reconstruction, vectorization, and topology judgment of lane lines, and finally complete the lane lines, thus requiring a lot of computation. As another example, during the map update, a process complexity is high, resulting in high update and maintenance costs.

In the current embodiment, in the case of receiving the local map data including road condition information, the completeness detection of the lane line may be performed on the local map data to obtain the detection result. The detection result may include the lane line being complete or the lane line having a missing area. The lane line having the missing area may correspond to various situations such as the lane line being discontinuous or a large area of the lane line having a color difference. Taking the lane line being white as an example, the large area of the lane line having the color difference may refer to a non-white area exceeding a predetermined area in the white lane line.

In the case where the detection result is the lane line having the missing area, the completed local map data may be obtained by performing completion processing on the lane line having the missing area. For example, the completion processing may include parsing the lane line having the missing area to determine physical quantities such as a color and a width. Then, the lane line having the missing area may be extended to obtain a completed lane line.

Alternatively, the completion processing may be inputting the local map data including the lane line having the missing area into a pre-trained lane line completion model, so that the completed lane line may be quickly obtained. That is, the completed local map data is obtained.

The rationality detection may be performed on the completed local map data. For example, the rationality detection may be detecting the completed lane line. For example, it may be detected whether a connection relationship between the completed lane line and a nearby lane is correct. It may alternatively be detected whether a line type, a thickness and the like of the completed lane line match those of the uncompleted lane line (i.e., the lane line having the missing area). The rationality detection may be performing image semantic segmentation processing on the completed local map data, thereby performing the rationality detection using a similarity of a result of the image semantic segmentation processing. For example, information (such as the line types and the thicknesses, etc.) of the completed lane line and the uncompleted lane line may be obtained using the image semantic segmentation processing. Rationality detection may be implemented by comparing a result of the uncompleted lane line and a result of the completed lane line.

Also, in another scenario, the rationality detection may alternatively be performed using technologies such as a pre-trained rationality detection model. For example, a generative adversarial network (GAN network) may be used to perform completion processing and discrimination processing on the lane line having the missing area. That is, the lane line completion processing may correspond to a generator network in the GAN network, and the rationality detection may correspond to a discriminator network in the GAN network.

In the case of passing the detection, the completed local map data may be synthesized with the global map data to obtain the optimization result of the map data.

Through the above processes, the defect that lane lines cannot be fully covered in the received local map data may be overcome. When it is detected that there is a missing area in the lane lines, completion processing may be performed on the lane line having the missing area. The processes are applicable to different scenarios, thereby improving generalization. In addition, since the rationality detection is set, an accuracy of the completed lane line may be guaranteed.

As shown in Fig. 2, in an embodiment, step S102 may include the following steps:
S201: preprocessing the local map data of which the detection result is the lane line having the missing area to obtain a preprocessing result; and
S202: inputting the preprocessing result into a pre-trained lane line completion model, so as to perform the completion processing on the lane line having the missing area.

Preprocessing may include rasterization of the local map data. After the rasterization, an image corresponding to the local map data may be obtained. Then, image enhancement processing, image resolution normalization processing and the like may be performed on the image to obtain the preprocessing result.

Further, the preprocessing result may be input into the pre-trained lane line completion model, so as to perform completion processing on the lane line having the missing area.

An input end of the pre-trained lane line completion model receives the preprocessed local map data with the missing area, and an output end may directly obtain the image of the completed lane line obtained by performing the completion processing on the lane line having the missing area.

Since the lane line completion model is pre-trained, the image of the completed lane line may be obtained efficiently. In addition, since it is a model operation, for the lane line having the missing area in the image, a completion result may be obtained directly without traversal operation, thereby reducing computational consumption.

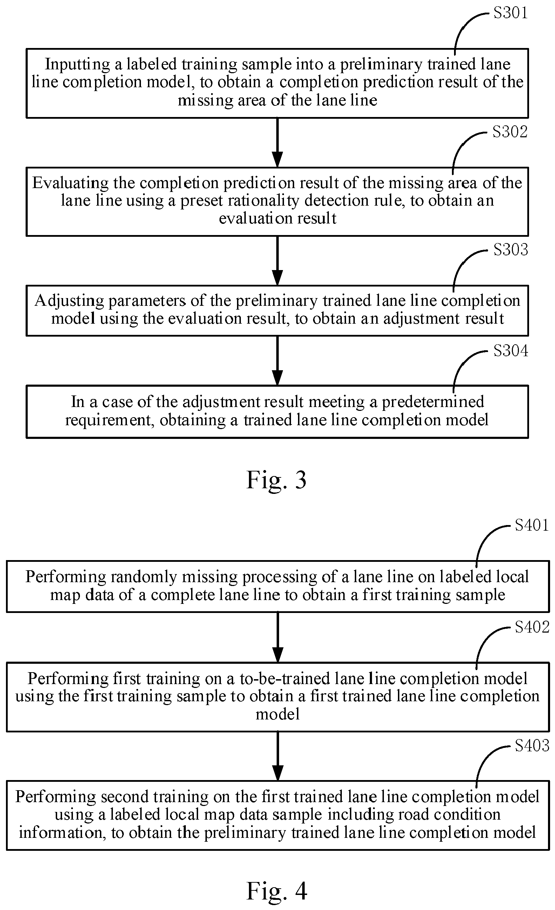

As shown in Fig. 3, in an embodiment, a training process of the lane line completion model may include the following steps:
S301: inputting a labeled training sample into a preliminary trained lane line completion model, to obtain a completion prediction result of the missing area of the lane line;
S302: evaluating the completion prediction result of the missing area of the lane line using a preset rationality detection rule, to obtain an evaluation result;
S303: adjusting a parameter of the preliminary trained lane line completion model using the evaluation result, to obtain an adjustment result; and
S304: in a case of the adjustment result meeting a predetermined requirement, obtaining the pre-trained lane line completion model.

The labeled training samples may include local map data including road information and local map data not including road information. The local map data including road information may be local map data uploaded by traffic participants in a real scenario. The local map data not including road information may be map data in a data sample set, which is more concise and less complex than the local map data in the real scenario. By using different kinds of local map data as the training samples, a generalization effect of model training may be improved.

The labeled training samples are input into the preliminary trained lane line completion model, to obtain the completion prediction result of the missing area of the lane line.

A classification neural network model may be used to evaluate the completion prediction result of the missing area of the lane line. For example, a probability of meeting the predetermined requirement is a%, and a probability of not meeting the predetermined requirement is b%. The parameters of the preliminary trained lane line completion model are adjusted using an error between a labeled result and a probability of whether the requirement is met. The above error may be reflected by a loss function, and a function of the loss function may be understood as: when the completion prediction result of the missing area of the lane line obtained by forward propagation of the preliminary trained lane line completion model is close to a true value, the evaluation result is that the probability of meeting the predetermined requirement is high; otherwise, the evaluation result is that the probability of meeting the predetermined requirement is low. In addition, the loss function is a function using the parameters of the lane line completion model as independent variables.

Using the above error, all the parameters of the preliminary trained lane line completion model are adjusted. The above error may be back-propagated in each layer of the preliminary trained lane line completion model, and parameters of each layer of the preliminary trained lane line completion model may be adjusted based on the above error until the predetermined requirement is met and the trained lane line completion model is obtained. Meeting the predetermined requirement may include an output of the evaluation result converging or achieving a desired effect.

Through the above steps, the lane line completion model is implemented in two steps. The first step is training based on samples, and the second step is training based on whether the preset rationality detection rule is met. By training the model in two steps, accuracies of results output by the model may be improved.

As shown in Fig. 4, in an embodiment, a method for determining the preliminary trained lane line completion model, may include the following steps:
S401: performing randomly missing processing of a lane line on labeled local map data of a complete lane line to obtain a first training sample;
S402: performing first training on a to-be-trained lane line completion model using the first training sample to obtain a first trained lane line completion model; and
S403: performing second training on the first trained lane line completion model using a labeled local map data sample including road condition information, to obtain the preliminary trained lane line completion model.

The local map data of the complete lane line may be the local map data filtered with high definition and obvious features. Randomly missing processing of the lane line may be performed on the local map data of the complete lane line, to obtain a sample for preliminary training of the model, i.e., the first training sample.

Randomly missing processing of the lane line may be performing random occlusion, random blur processing and the like on the lane line.

By inputting the first training sample into the to-be-trained lane line completion model, a completion prediction result for a randomly missing area may be obtained. Parameters of the to-be-trained lane line completion model may be adjusted using a difference between the completion prediction result and a labeled result. The specific adjustment process is as described above, and detailed description thereof will be omitted. The to-be-trained lane line completion model is iteratively trained using the first training sample until a result output by the first trained lane line completion mode converges.

Then, the labeled local map data samples including road condition information are used as second training samples. The labeled local map data samples including the road condition information may be local map data samples uploaded by traffic participants in a real scenario. That is, the second training samples may be local map data samples including lane lines having missing areas, or may be local map data samples including lane lines being complete (or including both the lane lines having the missing areas and the lane lines being complete). The second training samples are used to perform second training on the first trained lane line completion model to obtain the preliminary trained lane line completion model.

Through the above steps, the second training may be used as an optimization of the first training, and the first trained lane line completion model may be updated, so that the preliminary trained lane line completion model may be applied to different traffic scenarios, which increases the generalization effect of the lane line completion model.

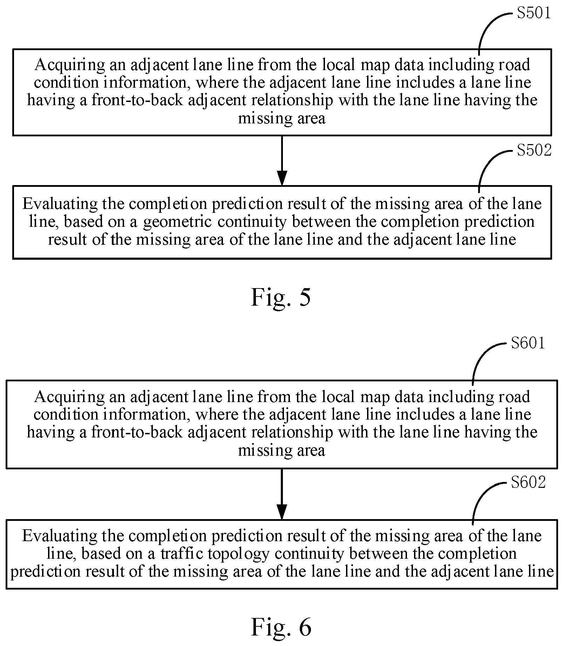

As shown in Fig. 5, in an embodiment, step S302 may include the following steps:

S501: acquiring an adjacent lane line from the local map data including the road condition information, where the adjacent lane line includes a lane line having a front-to-back adjacent relationship with the lane line having the missing area; and

S502: evaluating the completion prediction result of the missing area of the lane line, based on a geometric continuity between the completion prediction result of the missing area of the lane line and the adjacent lane line.

In the process of performing the rationality detection rule, image semantic segmentation processing may be performed on the local map data including road condition information to obtain different lane lines. For the completion prediction result of the missing area of the lane line, the geometric continuity between the completed lane line and its adjacent lane line may be verified. The adjacent lane line may be a lane line having a front-to-back adjacent relationship with the completed lane line. The front-to-back adjacent relationship may refer to division according to a traveling direction of a vehicle.

For example, the geometric continuity may include whether there is continuity between the completed lane line and the adjacent lane line, whether there is an offset between the completed lane line and the adjacent lane line, or the like.

Through the geometric continuity, the evaluation of the completion prediction result of the missing area of the lane line may be realized.

As shown in Fig. 6, in an embodiment, step S302 may include the following steps:
S601: acquiring an adjacent lane line from the local map data including road condition information, where the adjacent lane line includes a lane line having a front-to-back adjacent relationship with the lane line having the missing area; and
S602: evaluating the completion prediction result of the missing area of the lane line, based on a traffic topology continuity between the completion prediction result of the missing area of the lane line and the adjacent lane line.

Similar to step S501, in step S601, the adjacent lane line may be determined. The traffic topology continuity may include determining whether a connection relationship between the completed lane line and the adjacent lane line is correct. For example, if a backward adjacent lane line indicates a merging scenario, but a completed lane line indicates an outgoing scenario, then the traffic topology continuity is verified as erroneous.

As another example, if a backward adjacent lane line indicates a left turn, but a completed lane line indicates a U-turn, then the traffic topology continuity is verified as erroneous.

Through the traffic topology continuity, the evaluation of the completion prediction result of the missing area of the lane line may be realized.

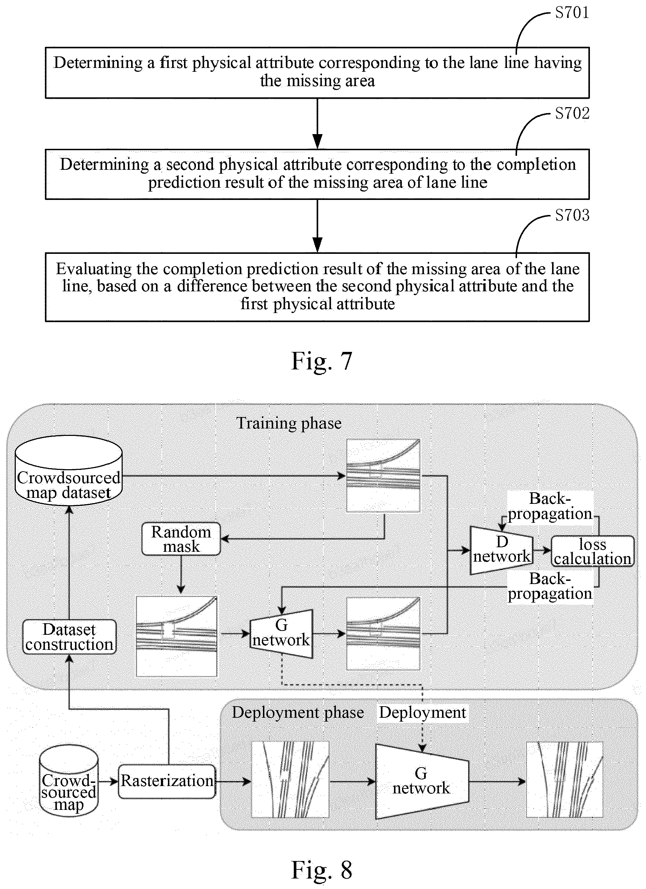

As shown in Fig. 7, in an embodiment, step S302 may include the following steps:
S701: determining a first physical attribute corresponding to the lane line having the missing area;
S702: determining a second physical attribute corresponding to the completion prediction result of the missing area of the lane line; and
S703: evaluating the completion prediction result of the missing area of the lane line, based on a difference between the second physical attribute and the first physical attribute.

The lane line having the missing area is an original lane line in the local map data including road condition information. The first physical attribute may include a color, a width, a line type (dotted, solid, double solid), or the like of a lane line.

The completion prediction result of the missing area of the lane line may correspond to a content output by the lane line completion model, which contains a completed part of the lane line. Correspondingly, the second physical attribute may be a physical attribute corresponding to the completed part of the lane line. Similarly, the second physical attribute may include a color, a width, a line type, or the like of a lane line.

Based on the difference between the second physical attribute and the first physical attribute, the completion prediction result of the missing area of the lane line is evaluated. For example, if the difference between the second physical attribute and the first physical attribute is within an allowable range, it may be determined that the completion prediction result of the missing area of the lane line is qualified.

For the evaluation of the completion prediction result of the missing area of the lane line, it may only rely on the physical attributes, or it may also rely on the physical attributes, the geometric continuity and the traffic topology continuity. Alternatively, at least one of the physical attributes, the geometric continuity and the traffic topology continuity may be selected.

It should be noted that, during the training of the lane line completion model, the parameters of the lane line completion model may be adjusted using the rationality detection rule, so as to complete the training of the model. After the model is deployed, the same rationality detection rule may be used to perform rationality detection on the completed local map data. Therefore, verification of the rationality and reliability of the completed local map data may be ensured.

Through the above steps, the evaluation of the completion prediction result of the missing area of the lane line may be realized.

In an embodiment, it may alternatively include: sending the optimization result of the map data to a designated traffic participant.

Through sharing of the optimization result of the map data, it may be beneficial for all traffic participants, including autonomous vehicles, to adjust travelling route planning based on the optimization result of the map data. In the case of traffic congestion, the traffic congestion may be improved and alleviated to a certain extent.

As shown in Fig. 8, the present disclosure relates to a method for optimizing map data, and the method may include a training phase and a deployment phase.

The training phase may include:
the construction of the crowdsourced map dataset including:
   performing rasterization on crowdsourced maps, selecting crowdsourced map images with complete lane lines and adding the images to a dataset to construct the dataset, thereby obtaining the crowdsourced map dataset; and
the training of the generator network including:
   performing random mosaic processing (corresponding to random mask in Fig. 8) and labeling processing on training samples in the crowdsourced map dataset. Random mosaic processing includes random occlusion of the original crowdsourced map images, making them crowdsourced map images with lane lines having missing areas, and
   inputting the crowdsourced map images with the lane lines having the missing areas into a generator network (corresponding to G network in Fig. 8), to obtain output crowdsourced map images with completed lane lines.

Inputs of a discriminator network (corresponding to D network in Fig. 8) are labeled original crowdsourced map images and the crowdsourced map images with completed lane lines, and an output of the discriminator network is the probability of the image being true or false.

A loss function (corresponding to loss calculation in Fig. 8) is used to determine whether the discriminator is classifying correctly. The generator network and the discriminator network are trained using an output result of the loss function.

The deployment phase may include:
the trained generator network is deployed to an application environment. The rasterized crowdsourced map images are input into the trained generator network. The trained generator network outputs the crowdsourced map images with automatically completed lane lines, and then feeds back lane line completion information to the crowdsourced maps through subsequent processing.

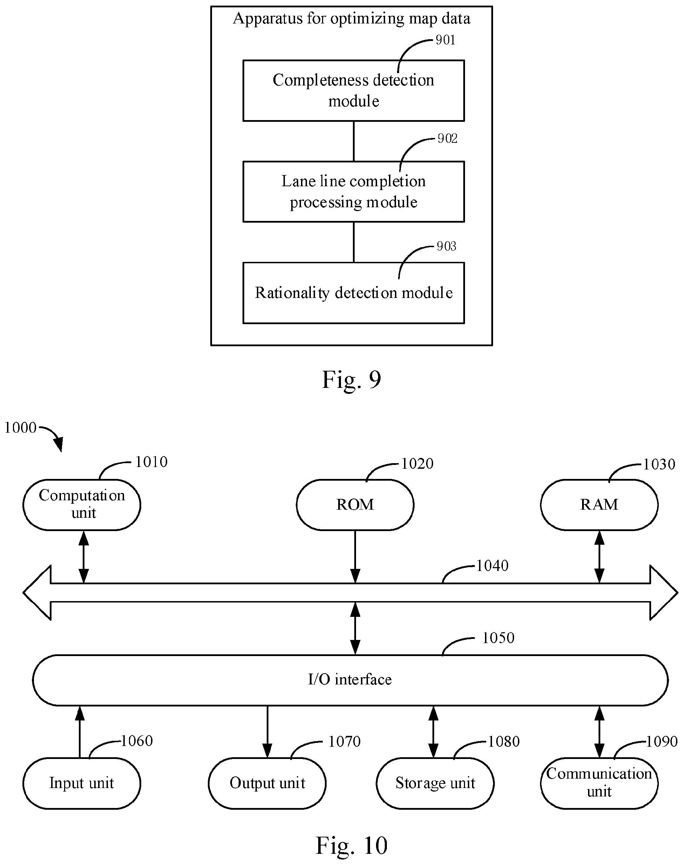

As shown in Fig. 9, the present disclosure relates to an apparatus for optimizing map data, and the apparatus may include:
a completeness detection module 901, configured to perform a completeness detection of a lane line on received local map data including road condition information to obtain a detection result, the detection result including the lane line being complete or the lane line having a missing area;
a lane line completion processing module 902, configured to, in a case where the detection result is the lane line having the missing area, perform completion processing on the lane line having the missing area to obtain completed local map data; and
a rationality detection module 903, configured to perform a rationality detection on the completed local map data, and in a case of passing the detection, synthesize the completed local map data with global map data to obtain an optimization result of map data.

In an embodiment, the lane line completion processing module 902 may include:
a preprocessing submodule, configured to preprocess the local map data of which the detection result is the lane line having the missing area to obtain a preprocessing result; and
a lane line completion processing execution submodule, configured to input the preprocessing result into a pre-trained lane line completion model, so as to perform the completion processing on the lane line having the missing area.

In an embodiment, the apparatus may further include:
a module for determining a completion prediction result of the missing area of the lane line, configured to input a labeled training sample into a preliminary trained lane line completion model, to obtain a completion prediction result of the missing area of the lane line;
an evaluation module, configured to evaluate the completion prediction result of the missing area of the lane line using a preset rationality detection rule, to obtain an evaluation result;
an adjustment module, configured to adjust a parameter of the preliminary trained lane line completion model using the evaluation result, to obtain an adjustment result; and
a model training result discrimination module, configured to, in a case of the adjustment result meeting a predetermined requirement, obtain the pre-trained lane line completion model.

In an embodiment, the module for determining a completion prediction result of the missing area of the lane line, may include:
a first training sample determining submodule, configured to perform randomly missing processing of a lane line on labeled local map data of a complete lane line to obtain a first training sample;
a first training submodule, configured to perform first training on a to-be-trained lane line completion model using the first training sample to obtain a first trained lane line completion model; and
a second training submodule, configured to perform second training on the first trained lane line completion mode using a labeled local map data sample including road condition information, to obtain the preliminary trained lane line completion model.

In an embodiment, the evaluation module may include:
an adjacent lane line acquisition submodule, configured to acquire an adjacent lane line from the local map data including the road condition information, where the adjacent lane line includes a lane line having a front-to-back adjacent relationship with the lane line having the missing area; and
a geometric continuity evaluation submodule, configured to evaluate the completion prediction result of the missing area of the lane line, based on a geometric continuity between the completion prediction result of the missing area of the lane line and the adjacent lane line.

In an embodiment, the evaluation module may include:
an adjacent lane line acquisition submodule, configured to acquire an adjacent lane line from the local map data including the road condition information, where the adjacent lane line includes a lane line having a front-to-back adjacent relationship with the lane line having the missing area; and
a traffic topology continuity evaluation submodule, configured to evaluate the completion prediction result of the missing area of the lane line, based on a traffic topology continuity between the completion prediction result of the missing area of the lane line and the adjacent lane line.

In an embodiment, the evaluation module may include:
a first physical attribute determining submodule, configured to determine a first physical attribute corresponding to the lane line having the missing area;
a second physical attribute determining submodule, configured to determine a second physical attribute corresponding to the completion prediction result of the missing area of the lane line; and
a physical attribute evaluation submodule, configured to evaluate the completion prediction result of the missing area of the lane line, based on a difference between the second physical attribute and the first physical attribute.

In an embodiment, the apparatus further includes a sending module, configured to send the optimization result of the map data to a designated traffic participant.

In the technical solution of the present disclosure, the acquisition, storage and application of the involved user personal information are in compliance with relevant laws and regulations, and do not violate public order and good customs.

According to an embodiment of the present disclosure, the present disclosure also provides an electronic device, a readable storage medium and a computer program product.

Fig. 10 illustrates a schematic block diagram of an example electronic device 1000 that may be used to implement embodiments of the present disclosure. The electronic device is intended to represent various forms of digital computers, such as laptop computers, desktop computers, workbenches, personal digital assistants, servers, blade servers, mainframe computers, and other suitable computers. The electronic device may also represent various forms of mobile apparatuses, such as personal digital processors, cellular phones, smart phones, wearable devices, and other similar computing apparatuses. The components shown herein, their connections and relationships, and their functions are merely examples, and are not intended to limit the implementation of the present disclosure described and/or claimed herein.

As shown in Fig. 10, the device 1000 includes a computation unit 1010, which may perform various appropriate actions and processing, based on a computer program stored in a read-only memory (ROM) 1020 or a computer program loaded from a storage unit 1080 into a random access memory (RAM) 1030. In the RAM 1030, various programs and data required for the operation of the device 1000 may also be stored. The computation unit 1010, the ROM 1020, and the RAM 1030 are connected to each other through a bus 1040. An input/output (I/O) interface 1050 is also connected to the bus 1040.

A plurality of parts in the device 1000 are connected to the I/O interface 1050, including: an input unit 1060, such as a keyboard and a mouse; an output unit 1070, such as various types of displays and speakers; the storage unit 1080, for example, a disk and an optical disk; and a communication unit 1090, such as a network card, a modem, or a wireless communication transceiver. The communication unit 1090 allows the device 1000 to exchange information/data with other devices over a computer network such as the Internet and/or various telecommunication networks.

The computation unit 1010 may be various general-purpose and/or specific-purpose processing components having processing and computing capabilities. Some examples of the computation unit 1010 include, but are not limited to, a central processing unit (CPU), a graphics processing unit (GPU), various specific-purpose artificial intelligence (AI) computing chips, various computation units running machine learning model algorithms, digital signal processors (DSP), and any appropriate processors, controllers, microcontrollers, etc. The computation unit 1010 performs the various methods and processes described above, such as a method for optimizing map data. For example, in some embodiments, the method for optimizing map data may be implemented as a computer software program, which is tangibly included in a machine readable medium, such as the storage unit 1080. In some embodiments, some or all of the computer programs may be loaded and/or installed on the device 1000 via the ROM 1020 and/or the communication unit 1090. When the computer program is loaded into the RAM 1030 and executed by the computation unit 1010, one or more steps of the method for optimizing map data described above may be performed. Alternatively, in other embodiments, the computation unit 1010 may be configured to perform the method for optimizing map data by any other appropriate means (for example, by means of firmware).

Various implementations of the systems and technologies described above herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), computer hardware, firmware, software, and/or a combination thereof. The various implementations may include: being implemented in one or more computer programs that are executable and/or interpretable on a programmable system including at least one programmable processor, and the programmable processor may be a specific-purpose or general-purpose programmable processor, and may receive data and instructions from a storage system, at least one input apparatus, and at least one output apparatus, and send the data and instructions to the storage system, the at least one input apparatus and the at least one output apparatus.

Program codes for implementing the method of the present disclosure may be compiled using any combination of one or more programming languages. The program codes may be provided to a processor or controller of a general-purpose computer, a specific-purpose computer, or other programmable apparatuses for data processing, such that the program codes, when executed by the processor or controller, cause the functions/operations specified in the flow charts and/or block diagrams to be implemented. The program codes may be completely executed on a machine, partially executed on a machine, partially executed on a machine and partially executed on a remote machine as a separate software package, or completely executed on a remote machine or server.

In the context of the present disclosure, the machine-readable medium may be a tangible medium which may contain or store a program for use by, or used in combination with, an instruction execution system, apparatus or device. The machine-readable medium may be a machine-readable signal medium or a machine-readable storage medium. The machine-readable medium may include, but is not limited to, electronic, magnetic, optical, electromagnetic, infrared, or semiconductor systems, apparatuses, or devices, or any appropriate combination of the above. A more specific example of the machine-readable storage medium will include an electrical connection based on one or more pieces of wire, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, an optical storage device, a magnetic storage device, or any appropriate combination of the above.

To provide interaction with a user, the systems and technologies described herein may be implemented on a computer that is provided with: a display apparatus (e.g., a CRT (cathode ray tube) or a LCD (liquid crystal display) monitor) configured to display information to the user; and a keyboard and a pointing apparatus (e.g., a mouse or a trackball) by which the user can provide an input to the computer. Other kinds of apparatuses may also be configured to provide interaction with the user. For example, feedback provided to the user may be any form of sensory feedback (e.g., visual feedback, auditory feedback, or haptic feedback); and an input may be received from the user in any form (including an acoustic input, a voice input, or a tactile input).

The systems and technologies described herein may be implemented in a computing system (e.g., as a data server) that includes a back-end component, or a computing system (e.g., an application server) that includes a middleware component, or a computing system (e.g., a user computer with a graphical user interface or a web browser through which the user can interact with an implementation of the systems and technologies described herein) that includes a front-end component, or a computing system that includes any combination of such a back-end component, such a middleware component, or such a front-end component. The components of the system may be interconnected by digital data communication (e.g., a communication network) in any form or medium. Examples of the communication network include: a local area network (LAN), a wide area network (WAN), and the Internet.

The computer system may include a client and a server. The client and the server are generally remote from each other, and usually interact via a communication network. The relationship between the client and the server arises by virtue of computer programs that run on corresponding computers and have a client-server relationship with each other. The server may be a cloud server, a distributed system server, or a server combined with a blockchain.

It should be understood that the various forms of processes shown above may be used to reorder, add, or delete steps. For example, the steps disclosed in the present disclosure may be executed in parallel, sequentially, or in different orders, as long as the desired results of the technical solutions disclosed in the present disclosure can be implemented. This is not limited herein.

The above specific implementations do not constitute any limitation to the scope of protection of the present disclosure. It should be understood by those skilled in the art that various modifications, combinations, sub-combinations, and replacements may be made according to the design requirements and other factors. Any modification, equivalent replacement, improvement, and the like made within the spirit and principle of the present disclosure should be encompassed within the scope of protection of the present disclosure.

## Claims

1. A method for optimizing map data, comprising:
performing (S101) a completeness detection of a lane line on received local map data comprising road condition information to obtain a detection result, the detection result comprising the lane line being complete or the lane line having a missing area;
in a case where the detection result is the lane line having the missing area, performing (SI02) completion processing on the lane line having the missing area to obtain completed local map data; and
performing (S103) a rationality detection on the completed local map data, and in a case of passing the detection, synthesizing the completed local map data with global map data to obtain an optimization result of map data.

2. The method according to claim 1, wherein the in a case where the detection result is the lane line having the missing area, performing completion processing on the lane line having the missing area, comprises:
preprocessing (S201) the local map data of which the detection result is the lane line having the missing area to obtain a preprocessing result; and
inputting (S202) the preprocessing result into a pre-trained lane line completion model, so as to perform the completion processing on the lane line having the missing area.

3. The method according to claim 2, wherein a training process of the pre-trained lane line completion model, comprises:
inputting (S301) a labeled training sample into a preliminary trained lane line completion model, to obtain a completion prediction result of the missing area of the lane line;
evaluating (S302) the completion prediction result of the missing area of the lane line using a preset rationality detection rule, to obtain an evaluation result;
adjusting (S303) a parameter of the preliminary trained lane line completion model using the evaluation result, to obtain an adjustment result; and
in a case of the adjustment result meeting a predetermined requirement, obtaining (S304) the pre-trained lane line completion model.

4. The method according to claim 3, wherein a method for determining the preliminary trained lane line completion model, comprises:
performing (S401) randomly missing processing of a lane line on labeled local map data of a complete lane line to obtain a first training sample;
performing (S402) first training on a to-be-trained lane line completion model using the first training sample to obtain a first trained lane line completion model; and
performing (S403) second training on the first trained lane line completion model using a labeled local map data sample comprising road condition information, to obtain the preliminary trained lane line completion model.

5. The method according to claim 3 or claim 4, wherein the evaluating the completion prediction result of the missing area of the lane line using a preset rationality detection rule, comprises:
acquiring (S501) an adjacent lane line from the local map data comprising the road condition information, wherein the adjacent lane line comprises a lane line having a front-to-back adjacent relationship with the lane line having the missing area; and
evaluating (S502) the completion prediction result of the missing area of the lane line, based on a geometric continuity between the completion prediction result of the missing area of the lane line and the adjacent lane line.

6. The method according to any one of claims 3 to 5, wherein the evaluating the completion prediction result of the missing area of the lane line using a preset rationality detection rule, comprises:
acquiring (S601) an adjacent lane line from the local map data comprising the road condition information, wherein the adjacent lane line comprises a lane line having a front-to-back adjacent relationship with the lane line having the missing area; and
evaluating (S602) the completion prediction result of the missing area of the lane line, based on a traffic topology continuity between the completion prediction result of the missing area of the lane line and the adjacent lane line.

7. The method according to any one of claims 3 to 6, wherein the evaluating the completion prediction result of the missing area of the lane line using a preset rationality detection rule, comprises:
determining (S701) a first physical attribute corresponding to the lane line having the missing area;
determining (S702) a second physical attribute corresponding to the completion prediction result of the missing area of the lane line; and
evaluating (S703) the completion prediction result of the missing area of the lane line, based on a difference between the second physical attribute and the first physical attribute.

8. The method according to any one of claims 1 to 7, further comprising:
sending the optimization result of the map data to a designated traffic participant.

9. An apparatus for optimizing map data, comprising:
a completeness detection module (S901), configured to perform a completeness detection of a lane line on received local map data comprising road condition information to obtain a detection result, the detection result comprising the lane line being complete or the lane line having a missing area;
a lane line completion processing module (S902), configured to, in a case where the detection result is the lane line having the missing area, perform completion processing on the lane line having the missing area to obtain completed local map data; and
a rationality detection module (S903), configured to perform a rationality detection on the completed local map data, and in a case of passing the detection, synthesize the completed local map data with global map data to obtain an optimization result of map data.

10. The apparatus according to claim 9, wherein the lane line completion processing module comprises:
a preprocessing submodule, configured to preprocess the local map data of which the detection result is the lane line having the missing area to obtain a preprocessing result; and
a lane line completion processing execution submodule, configured to input the preprocessing result into a pre-trained lane line completion model, so as to perform the completion processing on the lane line having the missing area.

11. The apparatus according to claim 10, wherein the apparatus further comprises:
a module for determining a completion prediction result of the missing area of the lane line, configured to input a labeled training sample into a preliminary trained lane line completion model, to obtain the completion prediction result of the missing area of the lane line;
an evaluation module, configured to evaluate the completion prediction result of the missing area of the lane line using a preset rationality detection rule, to obtain an evaluation result;
an adjustment module, configured to adjust a parameter of the preliminary trained lane line completion model using the evaluation result, to obtain an adjustment result; and
a model training result discrimination module, configured to, in a case of the adjustment result meeting a predetermined requirement, obtain the pre-trained lane line completion model.

12. The apparatus according to claim 11, wherein the module for determining a completion prediction result of the missing area of the lane line, comprises:
a first training sample determining submodule, configured to perform randomly missing processing of a lane line on labeled local map data of a complete lane line to obtain a first training sample;
a first training submodule, configured to perform first training on a to-be-trained lane line completion model using the first training sample to obtain a first trained lane line completion model; and
a second training submodule, configured to perform second training on the first trained lane line completion model using a labeled local map data sample comprising road condition information, to obtain the preliminary trained lane line completion model.

13. The apparatus according to claim 11 or claim 12, wherein the evaluation module comprises:
an adjacent lane line acquisition submodule, configured to acquire an adjacent lane line from the local map data comprising the road condition information, wherein the adjacent lane line comprises a lane line having a front-to-back adjacent relationship with the lane line having the missing area; and
a geometric continuity evaluation submodule, configured to evaluate the completion prediction result of the missing area of the lane line, based on a geometric continuity between the completion prediction result of the missing area of the lane line and the adjacent lane line.

14. A non-transitory computer readable storage medium storing computer instructions, wherein, the computer instructions are used to cause the computer to perform the method according to any one of claims 1 to 8.

15. A computer program product, comprising a computer program/instruction, the computer program/instruction, when executed by a processor, implements the method according to any one of claims 1 to 8.
